# EUROPEAN PATENT SPECIFICATION

(11) **EP 0 647 167 B1**
(45) Date of publication and mention of the grant of the patent: **09.02.2000**
(21) Application number: 93916704.5
(22) Date of filing: 22.06.1993
(51) Int. Cl.: B23D 49/04, B23D 57/00, B23D 49/16, B23D 51/16

(54) **SAW ATTACHMENT**
SÄGEBLATTBEFESTIGUNGSVORRICHTUNG
SYSTEME DE FIXATION POUR SCIE

(30) Priority: 23.06.1992 US 902903
(43) Date of publication of application: 12.04.1995
(73) Proprietor: WETHERBEE, Kirk B., Danvers, MA 01923 (US)
(72) Inventor: WETHERBEE, Kirk B., Danvers, MA 01923 (US)
(74) Representative: Bayliss, Geoffrey Cyril
(86) International application number: US9306001
(87) International publication number: WO9400264

(56) References cited:
- US-A- 2 668 567
- US-A- 2 822 005
- US-A- 3 044 171
- US-A- 3 876 015
- US-A- 4 984 369
- US-A- 5 193 281

## Description

This invention relates to a reciprocating saw having, a body, a motor, and a shaft arranged for connection to the motor and mounted for reciprocation along an axis relative to the body in response to the motor of the saw. A saw of this kind is known from US-A-3876015. More particularly, the invention relates to attachments for such saws.

A reciprocating saw is one of the construction industry's most useful tools. Carpenters, plumbers, electricians, sheet metal workers and virtually all other tradesmen use the reciprocating saw. However because the sawblade is axially aligned with the body of the saw, it is often difficult or awkward to cut, for example, in confined spaced close to walls or ceilings. Similar difficulties arise from the fact that the blade typically is also fixed relative to its long (reciprocating) axis.

US-A-3876015 discloses an attachment for a reciprocating saw. The attachment allows a blade to be rotated about an axis parallel to but spaced from a blade axis but is neither compact nor well adapted in operation in particularly cramped quarters.

This invention provides a motor, and a first shaft arranged for connection to the motor and mounted for reciprocation along a first axis relative to the body in response to the motor for the saw, wherein a second shaft is arranged for connection to a saw blade and is mounted for reciprocation along a second axis that is not coincident with, and in at least one relative positioning of the first and second shafts is not parallel to the first axis, and a drive connecting the first shaft to the second shaft so that reciprocation of the first shaft causes reciprocation of the second shaft.

The following is a description of some specific embodiments of the invention, reference being made to the accompanying drawings, in which:
Figure 1 schematically illustrates an attachment constructed in accordance with the present invention mounted on a conventional reciprocating say.
Figure 2 is a plan view, with one side plate, the saw blade and the tables removed, of the attachment of Figure 1.
Figure 3 is a plan view, partially in section, of the attachment of Figure 1.
Figure 4 is a section taken at line 4-4 of Figure 2.
Figures 5a and 5b are plan, partially schematic, views of a modified embodiment.
Figure 6 is a side view, partially in section, of a third embodiment of the invention.
Figure 7 is an end sectional view, taken at 7-7 of Figure 6.
Figure 8 is a top sectional view, taken at 8-8 of Figure 7.
Figures 9 and 10 are aide views illustrating the operation of the embodiment of Figure 6.

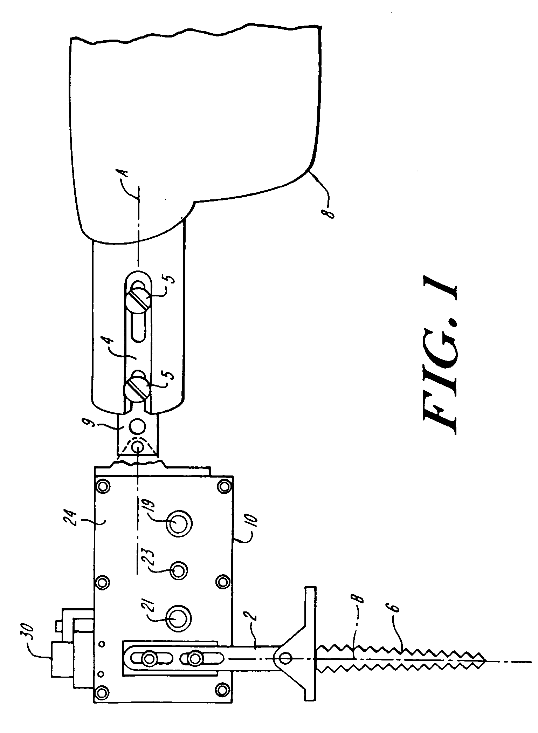

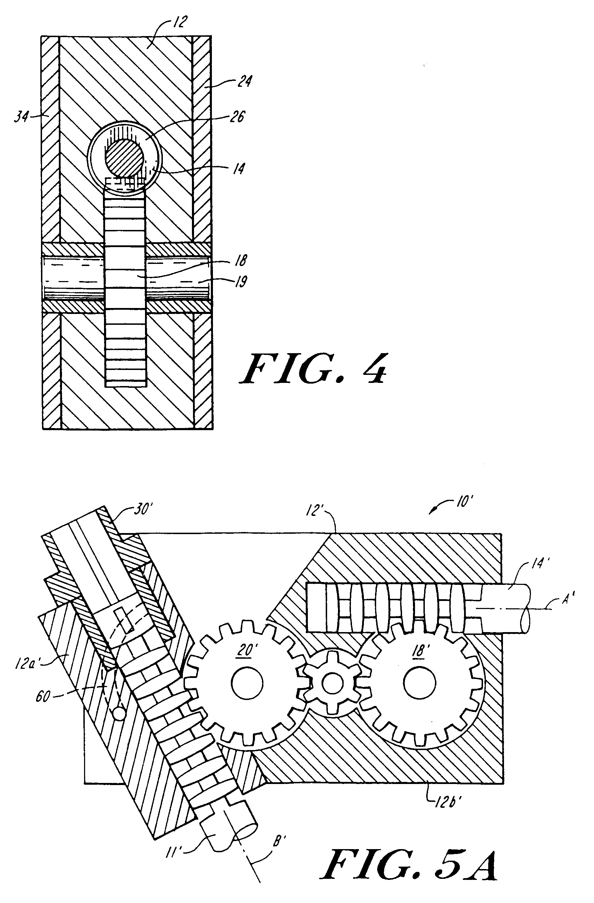

Referencing to Figures 1-4, and particularly to Figure 1, there is shown a conventional reciprocating saw 8 (e.g., of the type manufactured and sold by Milwaukee Electric Tool Co. under the trade name "Sawzall") to which is connected in accord with the present invention. A conventional blade 6 is connected to attachment 10.

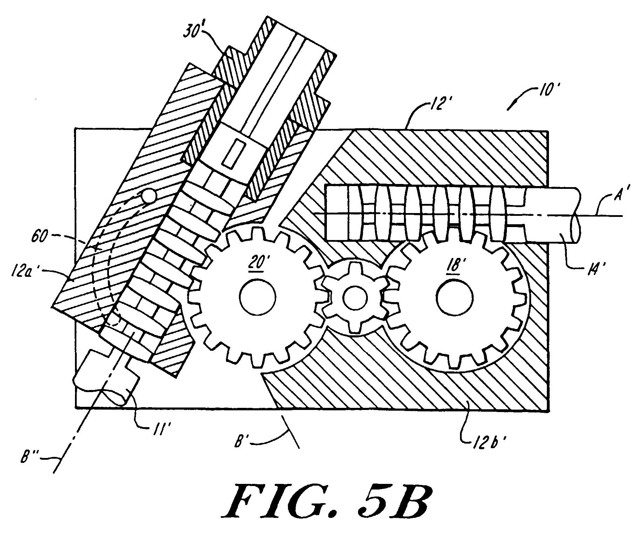

As illustrated, and conventionally, the output shaft 9 of saw 8 reciprocates on an axis A. Unconventionally, the output shaft 11 of attachment 10, and blade 6 which is connected to the attachment output shaft, reciprocate on a different axis B. In Figure 1, attachment 10 is constructed so that the blade axis B is substantially perpendicular, i.e., forms an angle of about 90°, to the axis A of reciprocation of the saw. In other embodiments, e.g., as shown in Figures 5a and 5b, the attachment, designated 10' in Figures 5a and 5b, is constructed so that the blade axis B may be pivoted relative to saw 8 to permit axis B to lie anywhere in the substantially 90° arc between lines B' (Fig. 5a; which forms an angle of about 45° with axis A) and B'' (Fig. 5b; which forms an angle of about 135° with axis A). In both embodiments, the attachment 10 permits blade 6 to be rotated, either clockwise or counterclockwise about its longitudinal axis (coaxial with axis B) through a full 360°.

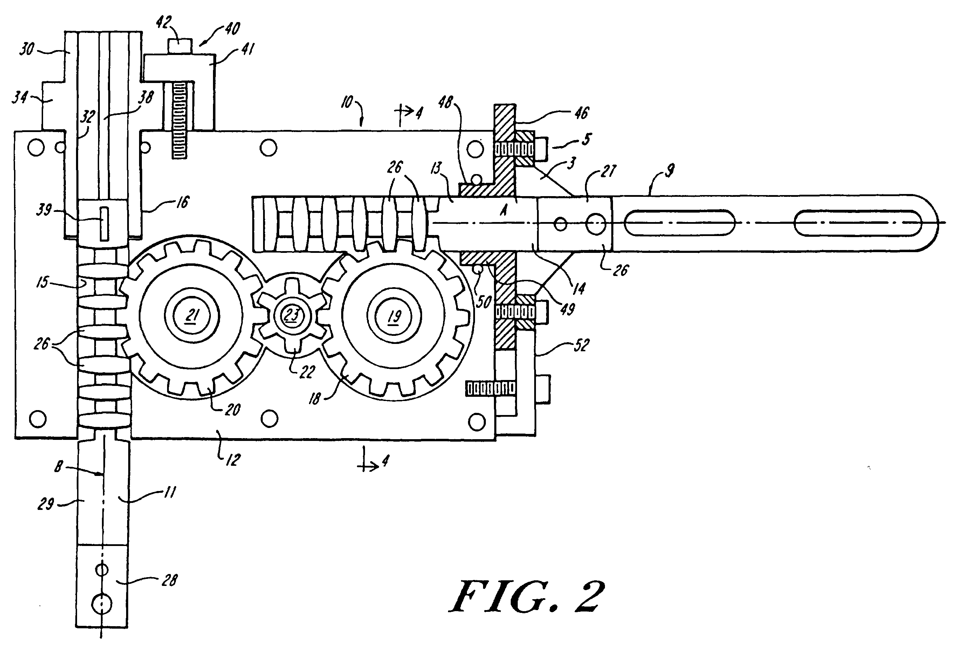

Attachment 10, shown most closely in Figures 2-4, comprises a housing 12, an input shaft 14, an output shaft 11, and a gear train coupling the input shaft 14 to the output shaft 11. In the embodiment of Figures 1-3, shafts 11 and 14 are mounted in respective bores 15 and 13, drilled into housing 12 perpendicular to each other. Bore 13 extends lengthwise of housing 12, from the end of the housing nearest saw 8 to about midway the length of housing 12. Bore 15 extends traversely through the housing 12, and includes a larger diameter countersink 16 at one end. Input shaft 14 is connected to the output shaft 9 of saw 8, and is mounted in cylindrical bore 13 for reciprocating movement on axis A. Output shaft 11, to which the sawblade 6 is connected, is mounted in bore 15 for reciprocation on axis B.

The gear train connecting attachment input shaft 14 and output shaft 11 includes two primary gears 18, 20 of equal pitch and diameter, and an intermediate, smaller diameter, idler gear 22. Each gear is mounted in a drilled bore that extends through the thickness of housing 12, and is mounted for rotation on a respective shaft 19, 21, 23. The ends of shafts 19, 21 23 are, in turn, mounted in bearings in the face plates 24 on opposite sides of housing 12.

Each of attachment input and output shafts 11, 14 includes a cylindrical rack, the annular teeth 26 of which project radially outwardly and engage the teeth of the respective one of gears 18, 20. The annular gear tooth arrangement permits shafts 11, 14 to rotate 360° about their respective axes while remaining in engagement with the respective one of gears 18, 20. In the illustrated embodiment, gears 18, 20 have the same diameter so that the reciprocation rate and speed and the displacement of shafts 11 and 14 are the same. The relative displacements, reciprocation rate and speed, and power output, may, if desired, be changed by varying the relative diameters of the two gears.

For connecting attachment 10 to saw 8, the base plate of a conventional table 4 is bolted to a rotary support plate 46 at the end of housing 12 nearest saw 8, so that saw output shaft 9 and attachment input shaft 14 are in axial alignment. The side plate of table 4 are bolted to saw 8 in the conventional manner, e.g., by bolts or cap screws 5. AS will be evident, table 4 holds the body of saw 8 and housing of attachment 10 fixed relative to each other as the saw motor causes the saw output shaft 9 and the input shaft 14 and output shaft 11 of attachment 10 to reciprocate. A second conventional table 2 is bolted to attachment 10 adjacent attachment output shaft, and is arranged so that saw blade 6 passes through the base plate of table 2 in the usual manner.

In some embodiments, support plate 46 may be welded to attachment 10, or support plate 46 may be omitted and base plate 3 of table 4 may be bolted or welded directly to the housing 12 of attachment 10. In the illustrated embodiment, support plate 46 is mounted on attachment 10 so that it can rotate about axis A relative to attachment 10. As shown in Figure 2, plate 46 includes an annular boss 48 slip fitted into a cylindrical countersink at the end of bore 13 nearest saw 8. Pins 50 extend through housing 12 on opposite sides of boss 48 and engage a groove in the outer periphery of boss 48. As will be evident, pins 50 both retain boss 48 in countersink 49 and permit plate 46 to rotate relative to attachment housing 12.

To retain attachment 10 in a desired rotational position, a keeper assembly 52 is mounted on one side of housing 12 and is arranged to engage the rim of plate 46.

The ends 27, 29 of shafts 14, 11 projecting outside housing 12 include flat apertured faces 26 and 28 arranged respectively to engage, so that shafts 14, 11 may be connected to, the output shaft 9 of saw 8 and blade 6.

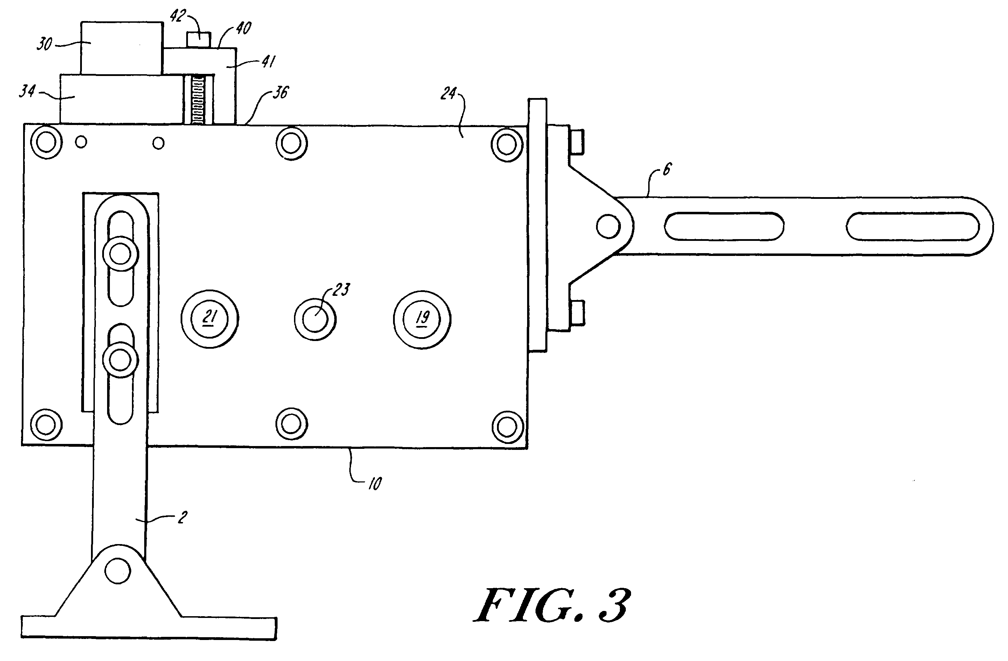

Referring now to Figures 2 and 3, a blade rotator 30 is mounted in countersink 16 of bore 15. As shown, rotator 30 is coaxial with bore 15, and itself includes a through-bore 32 which has a diameter substantially equal to that of the major portion of bore 15 and forms a slip fit with shaft 11. A projecting annular flange 34 on the outer end portion of rotator 30 engages the side 36 of housing 12. Rotator 30 is rotatable about its axis within bore 15 through a full 360°. A keeper assembly 40 is provided so that rotator 30 may be fixed in any desired rotational position. In the illustrated embodiment, keeper 40 includes a L-shaped member 41 arranged to engage the outer axially-facing surface of flange 34 and a cap screw 42 threaded into housing 12. When tightened, screw 42 holds member 41 tightly against flange 34; loosened, it permits rotator 30 to be turned 360 degrees around its axis.

An axial keyway 38 is cut in the inner wall of the bore 32 of rotator 30. Key 39 extends through the portion of shaft 11 within bore 32 and into keyway 38, permitting shaft 11 to reciprocate axially any relative rotation of the two. Thus, and as should be evident, rotator permits blade 6 to be rotated 360 degrees about its axis of reciprocation B, and to be fixed at any desired angle relative to the axis B. As the output shaft 11 reciprocates, keeper 40 holds the rotator, and this blade 6, in the desired angle to which rotator has been set.

Reference is now made to Figures 5a and 5b. As shown, somewhat schematically, the housing 12' of attachment 10' includes two portions, designated 12a' and 12b'. Portion 12b' is fixed between face plates 36'. Portion 12' is moveable between the two face plates between the position shown in Figure 5a in which the angle between axes A' and B' is about 135°, and that shown in Figure 5b which the angle between axes A' and B'' is about 45°. Curved slots 60 in the face plates permit portion 12a', which as shown carries output shaft 11' and rotator 30', to be rotated through an about 90° arc. Cap screws (not shown) extend through the housing and face plates and, when tightened, hold portion 12a' in any desired angular position.

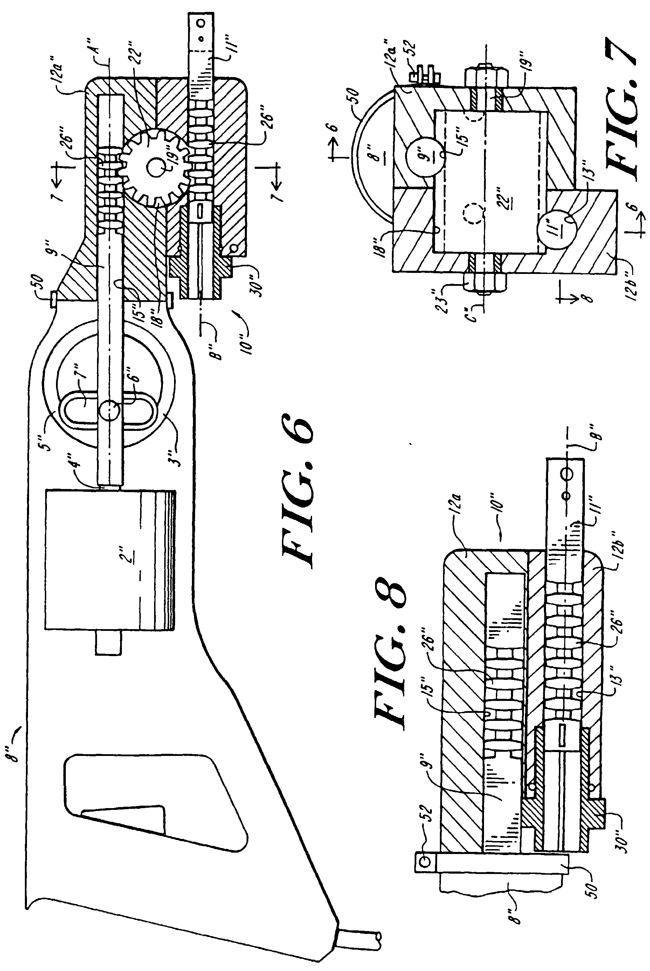

Figures 6-10 illustrate a reciprocating saw 8'' in which the system 10'' for permitting the output shaft 11'' to be pivoted relative to the saw's reciprocating output shaft 9'' is part of the saw as manufactured, rather than an attachment. As shown, the saw motor 2'' and gearing 3'' for changing the rotary output of the saw motor to reciprocating output of shaft 9'' is conventional. The rotating motor output shaft 4'' turns a circular plate 5'' around an axis perpendicular to the axis A'' of shafts 4'' and 9''. A projecting boss 6'' on shaft 9'' engages an eccentric slot 7'' on plate 5'', so the rotation of plate 5'' causes reciprocation of shaft 9''.

In conventional saws, the sawblade is connected directly to the shaft 9'' driven by motor 2'' and gearing 3''. In the illustrated embodiment, shaft 9'' provides the input to system 10''. As shown most clearly in Figures 6-8, system 10'' includes a two-piece housing 12'', the portion of shaft 9'' that provides an input to the system, output shaft 11'' to which the sawblade may be attached, and a coupling gear 22''. Shaft 9'' extends into a bore 15'' drilled into one piece 12a'' of housing 12'' and includes a cylindrical rack the annular teeth 26'' of which project radially outwardly and engage the teeth of gear 22''. Output shaft 11'' is mounted in a bore 13'' drilled through the other piece 12b'' of housing 12'', and also includes a cylindrical rack having teeth 26'' which engage the teeth of gear 22''. When the two halves 12a'' and 12b'' of housing are in the relative orientations shown in Figures 6-8, the axes of bores 13'', 15'' (and hence those of shafts 9'', 11'') are off-set both vertically and horizontally from each other. Gear 22'' is mounted in a drilled bore 18'' that extends through the central portion of housing 12'', and is mounted for rotation on a shaft 19'' the ends of which are, in turn, mounted in bearings in the side faces 24'' on opposite sides of housing 12''. As will be seen, shaft 9'' engages the top (as shown in Figure 6) of gear 22'' near one end of the gear, while shaft 11'' engages the bottom of gear 22'' near its other end.

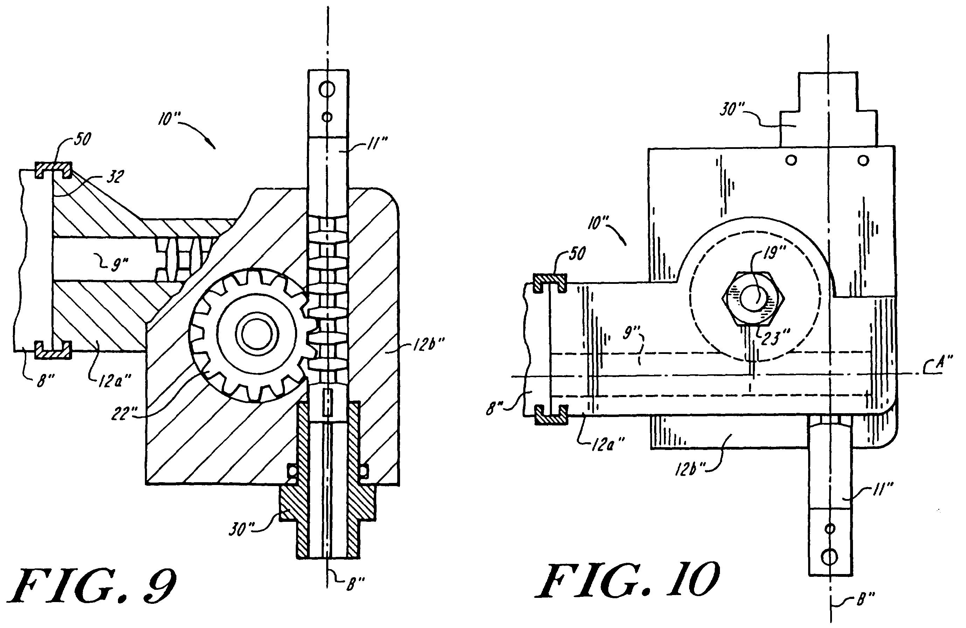

The two halves 12a'', 12b'' of housing 12 are rotatable relative to each other around the axis C'' of gear 22'', between the relative position shown in Figures 6-8 (in which the axes A'', B'' of shafts 9'', 11'' are parallel) to that shown in Figures 9 and 10 (in which the two axes A'', B'' are perpendicular). In the illustrated embodiment, the relative angular positioning of two housing halves is maintained by friction between their engaged inner faces; nuts 23'' at the ends of shaft 19 are loosened to permit the two housing halves to be relatively rotated, and are then retightened to hold halves 12a'', 12b'' in position.

System 10'' includes a blade rotator 30'', substantially identical to that previously described with reference to the embodiment of Figure 1, to permit the shaft 11'' (and hence a sawblade connected thereto) to be rotated about its axis of reciprocation B'' and to be fixed at any desired rotational position.

The entire system 11'' is also arranged for rotation, relative to saw 8'' on and about the axis of reciprocation A'' of shaft 9''. As shown most clearly in Figures 9 and 10, housing half 12a'' is connected to the housing of saw 8'' by a split ring 50. Radially-inwardly projecting flanges on the opposite sides of ring 50 project into annular grooves on the outer surfaces of housing half 12a'' and the housing of saw 8''. A bolt 52 (shown in Figures 7 and 8) draws the ends of ring 50 tightly together to hold the housing 12'' in the desired rotational position relative to saw 8'', and is loosened to permit the housing and saw to be rotated (about axis A'') into any desired relative rotational position.

Figures 9 and 10 illustrate the system 10'' in two of such positions. In Figure 9, the housing 12'' is bolted to the saw 8'' in the same relative position as shown in Figure 1 (though, as previously mentioned, housing system 12b'' has been rotated 90° relative to housing section 12a''). In Figure 10, housing 12'' has been rotated 180° from the Figure 1 orientation.

Other embodiments will be within the scope of the following claims.

## Claims

1. A reciprocating saw having a body (8), a motor (2''), and a first shaft (9) arranged for connection to the motor and mounted for reciprocation along a first axis (A) relative to the body in response to the motor of the saw, characterised in that a second shaft (11) is arranged for connection to a saw blade (6) and is mounted for reciprocation along a second axis (B) that is not coincident with, and in at least one relative positioning of the first and second shafts (9, 11) not parallel to the first axis, and a drive (19, 20, 21, 22, 23) connecting the first shaft to the second shaft so that reciprocation of the first shaft causes reciprocation of the second shaft.

2. A saw as claimed in claim 1, characterised in that when the shafts (9, 11) are in the at least one relative positioning, the second axis (B) is substantially perpendicular to the first axis (A).

3. A saw as claimed in claim 1, characterised in that the second shaft (11) is rotatable about the second axis, the saw further including a retainer (30) for holding the second shaft in a desired rotational position while permitting reciprocation of the second shaft along the second axis.

4. A saw as claimed in claim 1, including a housing (10) receiving the first shaft (9) and supporting the second shaft (11) and the drive, the housing being rotatable about the first axis (A), and including a retainer (52) for holding the housing in a desired rotational position.

5. A saw as claimed in claim 1, characterised in that the first and second shafts (9', 11') are movable relative to each other about a third axis generally perpendicular to the first and second axes (A', B') to vary the angle between the first axis and second axis.

6. A saw as claimed in claim 5, characterised in that the angle is variable in a range between about 45° and about 135°.

7. A saw as claimed in claim 5, characterised in that the angle is variable in a range between about 0° and about 90°.

8. A saw as claimed in claim 1, characterised in that each of the shafts (9, 11) comprises a rack of axially-spaced, radially-extending gear teeth (26) extending circumferentially thereof, and at least one of the shafts is rotatable relative to the drive (18 to 23) when in engagement with the drive.

9. A saw as claimed in claim 1, characterised in that the drive (18 to 23) includes at least one gear (22'') rotatable about an axis perpendicular to the first and second axes (A'', B'').

10. A saw as claimed in claim 9, characterised in that the drive comprises an input gear (18) engaging the first shaft, an output gear (20) engaging the second shaft, and an idler gear (22) engaging the input and output gears.

11. A saw as claimed in claim 9, characterised in that the first and second shafts (9'', 11'') engage the gear (19'').

12. A saw as claimed in claim 1, including an attachment having a housing (10, 10') in which the first and second shafts (9, 11) and the drive (18 to 23) are mounted, the housing being arranged for connection to the body of the saw.

13. A saw as claimed in claim 12, characterised in that the saw includes a reciprocating output shaft, and the first shaft (9) is connected to the output shaft.

14. A saw as claimed in claim 12, characterised in that the first axis and the second axis (9, 11) are not parallel.

15. A saw as claimed in claim 14, characterised in that the angle between the first axis (A) and the second axis (B) is in the range of about 45° to about 135°.

16. A saw as claimed in claim 1, including first (12a'') and second (12b'') relatively rotatable housing sections, the first shaft (9'') being received in and reciprocable relative to the first housing section, the second shaft (11'') being received in and reciprocable relative to the second housing section, and the drive (22'') being received in and rotatable relative to both of the housing sections.

17. A saw as claimed in claim 16, characterised in that the drive comprises a gear (22'') rotatable about a third axis (C) perpendicular to the first and second axes (A'', B''), each of the first and second shafts (9'', 11'') engage the gear (22''), and the first and second housing sections are relatively rotatable about the third axis.

18. A saw as claimed in claim 17, characterised in that the housing sections (12a'', 12b'') are relatively rotatable about the third axis through an angle of not less than about 90°.

19. A saw as claimed in claim 18, characterised in that the housing sections are rotatable relative to the saw about the first axis (A'').

## Patentansprüche

1. Hin- und herbewegende Säge mit einem Körper (8), einem Motor (2'') und einem ersten Schaft (9), welcher zur Verbindung mit dem Motor angeordnet und zur Hin- und Herbewegung entlang einer ersten Achse (A) relativ zu dem Körper als Antwort auf den Motor der Säge, angebracht ist, dadurch gekennzeichnet, daß ein zweiter Schaft (11) zur Verbindung mit einem Sägeblatt (6) angeordnet ist und zur Hin- und Herbewegung entlang einer zweiten Achse (B) angebracht ist, welche zweite Achse nicht mit der ersten Achse zusammenfällt und in wenigstens einer relativen Positionierung des ersten und des zweiten Schaftes (9, 11) nicht parallel zu der ersten Achse ist, sowie ein Antrieb (19, 20, 21, 22, 23), welcher den ersten Schaft mit dem zweiten Schaft derart verbindet, daß eine Hin- und Herbewegung des ersten Schaftes eine Hin- und Herbewegung des zweiten Schaftes verursacht.

2. Säge nach Anspruch 1, dadurch gekennzeichnet, daß wenn die Schafte (9, 11) sich in der wenigstens einen relativen Positionierung befinden, die zweite Achse (B) im wesentlichen senkrecht zur ersten Achse (A) ist.

3. Säge nach Anspruch 1, dadurch gekennzeichnet, daß der zweite Schaft (11) um die zweite Achse drehbar ist, die Säge weiterhin eine Aufnahme (30) umfaßt, um den zweiten Schaft in einer gewünschten Drehstellung zu halten, während eine Hin- und Herbewegung des zweiten Schaftes entlang der zweiten Achse gestattet ist.

4. Säge nach Anspruch 1, umfassend ein Gehäuse (10), welches den ersten Schaft (9) aufnimmt und den zweiten Schaft (11) sowie den Antrieb lagert, wobei das Gehäuse um die erste Achse (A) drehbar ist und eine Aufnahme (52) zum Halten des Gehäuses in einer gewünschten Drehstellung umfaßt.

5. Säge nach Anspruch 1, dadurch gekennzeichnet, daß der erste und der zweite Schaft (9', 11') relativ zueinander um eine dritte, zur ersten und zweiten Achse (A', B') im allgemeinen senkrechte Achse bewegbar sind, um den Winkel zwischen der ersten Achse und der zweiten Achse zu verändern.

6. Säge nach Anspruch 5, dadurch gekennzeichnet, daß der Winkel in einem Bereich zwischen etwa 45° und etwa 135° veränderbar ist.

7. Säge nach Anspruch 5, dadurch gekennzeichnet, daß der Winkel in einem Bereich zwischen etwa 0° und etwa 90° veränderbar ist.

8. Säge nach Anspruch 1, dadurch gekennzeichnet, daß jeder der Schafte (9, 11) eine Zahnstange mit axial beabstandeten, sich radial erstreckenden Zähnen (26), welche sich in Umfangsrichtung derselben erstrecken, umfaßt und wenigstens einer der Schafte relativ zu dem Antrieb (18 bis 23) drehbar ist, wenn er im Eingriff mit dem Antrieb steht.

9. Säge nach Anspruch 1, dadurch gekennzeichnet, daß der Antrieb (18 bis 23) wenigstens ein Zahnrad (22'') umfaßt, welches um eine zu der ersten und der zweiten Achse (A'', B'') senkrechten Achse drehbar ist.

10. Säge nach Anspruch 9, dadurch gekennzeichnet, daß der Antrieb ein mit dem ersten Schaft in Eingriff stehendes Eingangszahnrad (18), ein mit dem zweiten Schaft in Eingriff stehendes Ausgangszahnrad (20) und ein mit dem Eingangszahnrad und dem Ausgangszahnrad in Eingriff stehendes Zwischenzahnrad (22) umfaßt.

11. Säge nach Anspruch 9, dadurch gekennzeichnet, daß der erste und der zweite Schaft (9'', 11'') mit dem Zahnrad (19'') in Eingriff stehen.

12. Säge nach Anspruch 1, umfassend ein Zusatzelement mit einem Gehäuse (10, 10'), in welchem der erste und der zweite Schaft (9, 11) und der Antrieb (18 bis 23) angebracht sind, wobei das Gehäuse zur Verbindung mit dem Körper der Säge angeordnet ist.

13. Säge nach Anspruch 12, dadurch gekennzeichnet, daß die Säge einen sich hin- und herbewegenden Ausgangsschaft umfaßt und der erste Schaft (9) mit dem Ausgangsschaft verbunden ist.

14. Säge nach Anspruch 12, dadurch gekennzeichnet, daß die erste Achse und die zweite Achse (9, 11) nicht parallel sind.

15. Säge nach Anspruch 14, dadurch gekennzeichnet, daß der Winkel zwischen der ersten Achse (A) und der zweiten Achse (B) im Bereich von etwa 45° bis etwa 135° liegt.

16. Säge nach Anspruch 1, umfassend einen ersten (12a'') und einen zweiten (12b'') relativ drehbaren Gehäuseabschnitt, wobei der erste Schaft (9'') in dem ersten Gehäuseabschnitt aufgenommen und relativ zu diesem hin- und herbewegbar ist, wobei der zweite Schaft (11'') in dem zweiten Gehäuseabschnitt aufgenommen und relativ zu diesem hin- und herbewegbar ist, und wobei der Antrieb (22'') in beiden Gehäuseabschnitten aufgenommen und relativ zu diesen drehbar ist.

17. Säge nach Anspruch 16, dadurch gekennzeichnet, daß der Antrieb ein Zahnrad (22'') umfaßt, welches um eine dritte, zu der ersten und der zweiten Achse (A'', B'') senkrechte Achse (C) drehbar ist, wobei sowohl der erste und der zweite Schaft (9'', 11'') mit dem Zahnrad (22'') in Eingriff sind und wobei der erste und der zweite Gehäuseabschnitt um die dritte Achse relativ drehbar sind.

18. Säge nach Anspruch 17, dadurch gekennzeichnet, daß die Gehäuseabschnitte (12a'', 12b'') um die dritte Achse um einen Winkel von nicht weniger als etwa 90° relativ drehbar sind.

19. Säge nach Anspruch 18, dadurch gekennzeichnet, daß die Gehäuseabschnitte um die erste Achse (A'') relativ zu der Säge drehbar sind.

## Revendications

1. Scie sauteuse ayant un corps (8), un moteur (2'') et une première tige (9) disposée de façon à être reliée au moteur et montée de manière à exécuter un mouvement alternatif le long d'un premier axe (A) par rapport au corps en réponse au moteur de la scie, caractérisée en ce qu'une seconde tige (11) est disposée de façon à être reliée à une lame de scie (6) et est montée de façon à exécuter un mouvement alternatif le long d'un second axe (B) qui ne coïncide pas avec le premier axe et qui, dans au moins un positionnement relatif des première et seconde tiges (9, 11), n'est pas parallèle au premier axe, et une transmission (19, 20, 21, 22, 23) reliant la première tige à la deuxième tige afin qu'un mouvement alternatif de la première tige provoque un mouvement alternatif de la seconde tige.

2. Scie selon la revendication 1, caractérisée en ce que, lorsque les tiges (9, 11) sont dans le, au moins un, positionnement relatif, le second axe (B) est sensiblement perpendiculaire au premier axe (A).

3. Scie selon la revendication 1, caractérisée en ce que la seconde tige (11) peut tourner autour du second axe, la scie comprenant en outre un élément de retenue (30) destiné à maintenir la seconde tige dans une position de rotation souhaitée tout en permettant un mouvement alternatif de la seconde tige le long du second axe.

4. Scie selon la revendication 1, comprenant un boîtier (10) recevant la première tige (9) et supportant la seconde tige (11) et la transmission, le boîtier pouvant tourner autour du premier axe (A), et comprenant un élément de retenue (52) destiné à maintenir le boîtier dans une position de rotation souhaitée.

5. Scie selon la revendication 1, caractérisée en ce que les première et seconde tiges (9', 11') sont mobiles l'une par rapport à l'autre autour d'un troisième axe globalement perpendiculaire aux premier et deuxième axes (A', B') pour faire varier l'angle formé entre le premier axe et le deuxième axe.

6. Scie selon la revendication 5, caractérisée en ce que l'angle est variable dans une plage comprise entre environ 45° et environ 135°.

7. Scie selon la revendication 5, caractérisée en ce que l'angle est variable dans une plage comprise entre environ 0° et environ 90°.

8. Scie selon la revendication 1, caractérisée en ce que chacune des tiges (9, 11) comporte une crémaillère ayant des dents d'engrenage (26) espacées axialement, s'étendant radialement le long de sa circonférence, et au moins l'une des tiges peut tourner par rapport à la transmission (18 à 23) lorsqu'elle est en prise avec la transmission.

9. Scie selon la revendication 1, caractérisée en ce que la transmission (18 à 23) comprend au moins une roue dentée (22'') pouvant tourner autour d'un axe perpendiculaire aux premier et deuxième axes (A'', B'').

10. Scie selon la revendication 9, caractérisée en ce que la transmission comporte une roue dentée d'entrée (18) en prise avec la première tige, une roue dentée de sortie (20) en prise avec la seconde tige, et une roue dentée folle (22) en prise avec les roues dentées d'entrée et de sortie.

11. Scie selon la revendication 9, caractérisée en ce que les première et seconde tiges (9'', 11'') sont en prise avec la roue dentée (19'').

12. Scie selon la revendication 1, comprenant un accessoire ayant un boîtier (10, 10') dans lequel les première et seconde tiges (9, 11) et la transmission (18 à 23) sont montées, le boîtier étant agencé pour être relié au corps de la scie.

13. Scie selon la revendication 12, caractérisée en ce que la scie comprend une tige de sortie à mouvement alternatif, et la première tige (9) est reliée à la tige de sortie.

14. Scie selon la revendication 12, caractérisée en ce que le premier axe et le deuxième axe (9, 11) ne sont pas parallèles.

15. Scie selon la revendication 14, caractérisée en ce que l'angle formé entre le premier axe (A) et le deuxième axe (B) est compris dans la plage d'environ 45° à environ 135°.

16. Scie selon la revendication 1, comprenant des première (12a'') et seconde (12b'') parties de boîtier pouvant tourner l'une par rapport à l'autre, la première tige (9'') étant reçue dans, et pouvant être animée d'un mouvement alternatif par rapport à, la première partie de boîtier, la seconde tige (11'') étant reçue dans, et pouvant être animée d'un mouvement alternatif par rapport à, la seconde partie de boîtier, et la transmission (22'') étant reçue dans les deux parties de boîtier et pouvant tourner par rapport à elles.

17. Scie selon la revendication 16, caractérisée en ce que la transmission comporte une roue dentée (22'') pouvant tourner autour d'un troisième axe (C) perpendiculaire aux premier et deuxième axes (A'', B''), chacune des première et sconde tiges (9'', 11'') est en prise avec la roue dentée (22''), et les première et seconde parties de boîtier peuvent tourner relativement autour du troisième axe.

18. Scie selon la revendication 17, caractérisée en ce que les parties de boîtier (12a'', 12b'') peuvent tourner relativement autour du troisième axe sur un angle non inférieur à environ 90°.

19. Scie selon la revendication 18, caractérisée en ce que les parties de boîtier peuvent tourner par rapport à la scie autour du premier axe (A'').
